# FASCICULE DE BREVET EUROPEEN

(11) **EP 3 574 637 B1**
(45) Date de publication et mention de la délivrance du brevet: **24.11.2021**
(21) Numéro de dépôt: 18707071.9
(22) Date de dépôt: 25.01.2018
(51) Int. Cl.: H04M 3/42

(54) **ACTIVATION AUTOMATIQUE DE LA CONFIGURATION D'UN TERMINAL DE COMMUNICATION**
AUTOMATISCHE AKTIVIERUNG DER KONFIGURATION EINES KOMMUNIKATIONSENDGERÄTS
AUTOMATIC ACTIVATION OF THE CONFIGURATION OF A COMMUNICATION TERMINAL

(30) Priorité: 27.01.2017 FR 1750670
(43) Date de publication de la demande: 04.12.2019
(73) Titulaire: ORANGE, 92130 Issy-les-Moulineaux (FR)
(72) Inventeur: MONCOMBLE, Ghislain, 92326 Châtillon Cedex (FR)
(86) Numéro de dépôt international: PCT/FR2018/050173
(87) Numéro de publication internationale: WO 2018/138442

(56) Documents cités:
- US-A1- 2013 254 685
- Ian Paul: "Apple saves iPhone call history to iCloud, but barely mentions it", , 17 novembre 2016 (2016-11-17), XP055407568, Extrait de l'Internet: URL:https://www.macworld.com/article/31424 00/data-center-cloud/apple-saves-iphone-ca ll-history-to-icloud-but-barely-mentions-i t.html [extrait le 2017-09-18]

## Description

### Domaine de l'invention

La présente invention concerne le domaine de la personnalisation de multiples terminaux de communication destinés à être utilisés par un même utilisateur ou bien encore destinés à être partagés entre plusieurs utilisateurs.

L'invention peut notamment être mise en oeuvre dans un terminal de communication doté d'une interface utilisateur, d'une interface graphique et d'un module d'accès à un réseau de communication, par exemple une tablette, un téléphone portable, un smartphone (« téléphone intelligent »), un ordinateur personnel, une télévision connectée à un réseau de communication, etc...

L'invention s'applique plus particulièrement à l'activation automatique de la configuration d'un terminal de communication qui est personnalisée en fonction d'un utilisateur courant de ce terminal.

### Présentation de l'art antérieur

Actuellement, selon un premier contexte d'utilisation pour lequel un utilisateur détient plusieurs terminaux de communication différents, dont certains peuvent être partagés entre plusieurs utilisateurs, l'utilisateur personnalise généralement chaque terminal d'une manière différente. Par exemple, en supposant que l'utilisateur détient deux terminaux de communication, il choisira par exemple :
- de configurer tel fond d'écran pour un premier terminal qui lui est personnel et tel autre fond d'écran pour un second terminal qui est partagé avec d'autres utilisateurs ;
- de configurer tel mode de notification des appels entrants pour le premier terminal et tel autre mode de notification des appels entrants pour le second terminal ;
- d'installer et d'utiliser tels logiciels ou applications pour le premier terminal et tels logiciels ou applications pour le second terminal, certain de ces logiciels ou certaines de ces applications pouvant être communs aux premier et second terminaux ;

- d'utiliser un navigateur Internet d'un premier type sur le premier terminal et d'utiliser, sur le deuxième terminal, ce même navigateur internet ainsi qu'un navigateur Internet d'un deuxième type ;
- etc.

Il y a des situations où l'utilisateur souhaiterait récupérer, sur un premier terminal qu'il est en train d'utiliser à l'instant courant, tout ou partie des éléments de configuration d'un second terminal qu'il a utilisé avant l'instant courant (appels, messages, liens Internet favoris, historiques de navigation et cookies etc...). Selon un premier cas de figure, imaginons le cas où, par exemple, avant l'instant courant, un utilisateur qui s'est connecté sur le second terminal à une application de réseau social souhaite vouloir poursuivre sa discussion sur le premier terminal qu'il détient à l'instant courant. Dans cette situation, soit cette application est déjà installée dans le premier terminal et l'utilisateur est quand même obligé de se reconnecter manuellement à cette application en fournissant des données d'identification, soit cette application n'est pas installée dans le premier terminal, et l'utilisateur est obligé de l'installer sur le premier terminal avant de s'y connecter. Une telle manipulation est peu flexible, compliquée et prend du temps. Selon un deuxième cas de figure, imaginons le cas où, par exemple, avant l'instant courant, un utilisateur qui s'est connecté avec le second terminal sur différents sites Web qui présentent de l'intérêt pour lui, ne peut pas, lorsqu'il commence à utiliser le premier terminal à l'instant courant, bénéficier d'un profilage publicitaire qui tienne compte des informations qu'il a consultées précédemment sur ces sites Web. Ainsi, compte tenu du fait que l'utilisateur utilise différents terminaux, le profilage publicitaire de cet utilisateur n'est pas performant, ce qui a pour effet d'entraîner une mauvaise adéquation entre les produits ou services recherchés par l'utilisateur courant et les propositions des annonceurs.

Dans le contexte d'un terminal de communication partagé entre plusieurs utilisateurs, les inconvénients mentionnés ci-dessus se retrouvent. Par exemple, le profilage publicitaire n'est pas non plus efficient du fait de la prise en compte par les outils du marché de la combinaison de critères issus de différents profils n'ayant pas forcément les mêmes attentes. Par exemple, dans le cas d'un terminal dont l'utilisation est partagée par les différents membres d'une même famille, un enfant aura tendance à consulter à un instant courant des sites Web de musique, de sport, de dessins-animés, et à un instant suivant, un adulte de la famille qui utilise le terminal, se verra proposer des publicités personnalisées sur les sujets consultés précédemment par l'enfant. A l'inverse, un adulte aura tendance à consulter à un instant courant des sites Web liés à ses besoins, et à un instant suivant, un enfant de la famille qui utilise le terminal, se verra proposer des publicités personnalisées sur les sujets consultés précédemment par l'adulte. Ce dernier type de profilage publicitaire peut en outre être préjudiciable à l'enfant si les informations proposées sont susceptibles de heurter sa sensibilité.

Toujours dans le contexte d'un terminal de communication partagé, la configuration personnalisée s'avère encore plus difficile, en raison des problèmes de confidentialité qui sont susceptibles de se poser vis-à-vis de la divulgation des données propres à chaque utilisateur. En effet, un utilisateur qui utilise un terminal partagé à l'instant courant est susceptible de pouvoir se connecter sur des applications ou services Web auxquels un autre utilisateur s'est préalablement authentifié à un instant précédent l'instant courant et si cet autre utilisateur a oublié de s'y déconnecter.

Enfin, que le terminal de communication soit partagé ou non, un autre inconvénient des personnalisations de terminaux qui sont proposées actuellement est qu'elles ne permettent pas à un utilisateur qui souhaite ne pas conserver, sur un terminal considéré, les historiques d'usage Internet, les cookies, les appels et/ou messages, les coordonnées, etc..., qui sont relatifs à certains sites Web et/ou applications, d'effectuer automatiquement une sélection de ces informations en vue de les supprimer. Actuellement, l'utilisateur n'a pas d'autre choix que soit de supprimer l'ensemble de l'historique du terminal concerné, soit de supprimer manuellement chacun des liens non désirés, ce qui demande souvent un temps très conséquent, une fois le moyen de réaliser cette opération connue, par exemple via l'historique du navigateur Internet utilisé.

Les documents US 2013/254685 A1 et lan Paul: "Apple saves iPhone callhistory to iCloud, but barely mentions if', 17 November 2016 (2016-11-17), XP055407568, Retrieved from the Internet:
URL:https://www.macworld.com/article/3142400/data-center-cloud/apple-saves-iphone-ca 11-history-to-icloud-but-barely-mentions-it.html [retrieved on 2017-09-18] divulguent chacun une technique de configuration automatique d'un terminal, dans laquelle il est possible de synchroniser sur un premier terminal d'un utilisateur préalablement identifié des informations obtenues précédemment à partir du premier terminal ou d'un deuxième terminal, telles que par exemple des liens Internet favoris et/ou un historique de navigation de l'utilisateur.

### Objet et résumé de l'invention

Un des buts de l'invention est de remédier à des inconvénients de l'état de la technique précité.

A cet effet, un objet de la présente invention concerne un procédé d'activation automatique de la configuration d'un terminal de communication qui est personnalisée en fonction d'un utilisateur courant du terminal.

Un tel procédé est remarquable en ce qu'il met en oeuvre ce qui suit :
- identifier à un instant courant l'utilisateur courant en possession du terminal,
- récupérer des informations de paramétrage du terminal qui ont été prédéfinies par l'utilisateur courant identifié en tant que règles de récupération de données d'usage du terminal,
- récupérer des données d'usage d'au moins un terminal de communication ayant été utilisé par l'utilisateur courant antérieurement à l'instant courant, en fonction desdites règles de récupération,
- configurer le terminal que l'utilisateur courant a en sa possession avec les données d'usage récupérées en fonction desdites règles de récupération.

Une telle disposition permet ainsi à un utilisateur étant à un instant courant en possession d'un terminal de communication qui soit lui appartient exclusivement, soit est partagé par d'autres utilisateurs, de récupérer sur ce terminal des données d'usage propres à l'utilisateur et qui ont été générées à un instant précédent l'instant courant, soit sur au moins un autre terminal appartenant exclusivement à l'utilisateur, soit sur ledit terminal. La récupération de telles données d'usage est mise en oeuvre grâce à un paramétrage prédéterminé par l'utilisateur, ledit paramétrage définissant des règles de récupération de ces données d'usage.

Par données d'usage d'au moins un terminal de communication, on entend ci-après l'ensemble des éléments auxquels un utilisateur a accès lorsqu'il utilise un terminal de communication ou bien encore des moyens d'accès Internet contenus dans ledit terminal, tels qu'un navigateur Internet.

De telles données comprennent à titre non exhaustif :
- le fond d'écran, et/ou
- le répertoire de contacts, et/ou
- l'historique des appels émis/reçus, et/ou
- l'historique des messages SMS émis/reçus, et/ou
- des liens Internet favoris, et/ou
- des données d'accès à des comptes de l'utilisateur courant, et/ou
- des données d'historique d'usage Internet générées lors de l'utilisation de services Internet, tels que par exemple la messagerie électronique, le commerce en ligne, la Vidéo à la Demande, ou bien encore générées lors de la navigation sur le Web.

Ainsi, grâce à l'invention, l'utilisateur d'un terminal peut récupérer automatiquement sur le terminal qu'il utilise à l'instant courant des données estimées peu ou pas confidentielles mais également des données estimées confidentielles, telles que les données d'accès à un ou plusieurs de ses comptes ou encore tout ou partie des données d'historique d'usage Internet générées à un instant précédent sur un autre terminal, ou bien encore tout ou partie des données générées lors de la navigation de l'utilisateur sur le Web.

Dans le cas où le terminal qui est en possession de l'utilisateur courant à l'instant courant et dans le cas où le terminal qui a été utilisé par l'utilisateur courant à un instant précédent l'instant courant sont tous les deux des terminaux appartenant exclusivement à l'utilisateur courant, l'invention permet avantageusement de garantir la continuité du profilage de l'utilisateur courant à des fins commerciales ou du ciblage publicitaire de ce dernier, quand bien même l'utilisateur change de terminal. De cette façon, même après avoir changé de terminal, l'utilisateur bénéficie sur le terminal qu'il est en train d'utiliser à l'instant courant de l'affichage de publicités personnalisées.

Selon un mode de réalisation particulier, pendant toute la durée d'utilisation du terminal par l'utilisateur courant, il est mis en œuvre ce qui suit :
- analyse des actions de l'utilisateur courant en relation avec le terminal,
- pour une action donnée, récupérer ou non une donnée d'usage du terminal correspondant à l'action donnée et au moyen support de cette action, en association avec l'instant où l'action a été mise en œuvre, en fonction des informations de paramétrage du terminal récupérées.

Une telle disposition permet avantageusement de disposer d'un suivi automatisé et centralisé des actions de l'utilisateur sur le terminal pendant toute la durée d'utilisation du terminal. Un tel suivi est avantageusement adapté aux préférences de l'utilisateur car il s'applique uniquement sur les actions que l'utilisateur a mentionnées dans le paramétrage préalable.

Selon un autre mode de réalisation particulier, si un utilisateur antérieur, différent de l'utilisateur courant, a utilisé le terminal avant l'instant courant, il est mis en œuvre ce qui suit :
- récupérer des informations de paramétrage du terminal associées à l'utilisateur antérieur,
- récupérer des données d'usage du terminal ayant été utilisé par l'utilisateur antérieur, en fonction des informations de paramétrage du terminal récupérées,
- appliquer un traitement de confidentialité aux données d'usage récupérées en fonction des informations de paramétrage du terminal récupérées.

Une telle disposition permet en outre, dans le cas où le terminal en possession de l'utilisateur courant à l'instant courant est un terminal qui est partagé par d'autres utilisateurs et que le terminal a été utilisé par un utilisateur différent de l'utilisateur courant à un instant précédent l'instant courant, de fournir à l'utilisateur courant une configuration personnalisée du terminal, tout en privilégiant la confidentialité des données d'usage propres à l'utilisateur antérieur.

Selon encore un autre mode de réalisation particulier, lorsque l'utilisateur antérieur a été identifié préalablement à la récupération des informations de paramétrage du terminal associées à l'utilisateur antérieur, les informations de paramétrage récupérées sont des informations prédéfinies par ce dernier.

Puisque l'utilisateur est préalablement identifié, une telle disposition permet de récupérer un profil de l'utilisateur antérieur qui est personnalisé selon ses préférences grâce à la récupération d'informations de paramétrage qui ont été prédéfinies par l'utilisateur antérieur. En outre, l'application du traitement de confidentialité sera avantageusement appliqué aux données d'usage de ce profil, et donc conformément aux préférences de l'utilisateur antérieur définies au préalable dans les informations de paramétrage.

Selon encore un autre mode de réalisation particulier, lorsque l'utilisateur antérieur n'a pas été identifié préalablement à la récupération des informations de paramétrage du terminal associées à l'utilisateur antérieur, les informations de paramétrage associées à l'utilisateur antérieur sont préétablies par défaut.

Une telle disposition permet avantageusement, grâce à la récupération d'informations de paramétrage définies au préalable par défaut, d'appliquer un traitement de confidentialité sur tout ou partie des données d'usage associées à l'utilisateur antérieur, en particulier les données d'usage présentant un caractère de confidentialité élevée.

Selon encore un autre mode de réalisation particulier, le traitement de confidentialité appliqué aux données d'usage de l'utilisateur antérieur récupérées met en œuvre ce qui suit :
- recopier tout ou partie des données d'usage récupérées dans un espace de stockage associé à l'utilisateur antérieur, et/ou
- supprimer du terminal tout ou partie des données d'usage récupérées, et/ou
- déconnecter l'utilisateur antérieur de tout ou partie des ressources sécurisées auxquelles l'utilisateur antérieur a accédé.

Une telle disposition permet avantageusement de conserver, de façon transparente pour l'utilisateur antérieur, ses données d'usage, en vue d'être récupérées sur le prochain terminal qu'il utilisera.

Par ailleurs, le traitement de confidentialité appliqué aux données d'usage de l'utilisateur antérieur est particulièrement flexible et adapté aux souhaits de l'utilisateur antérieur quand il dépend des informations de paramétrage qui ont été prédéfinies par l'utilisateur antérieur. Ainsi, lors d'un tel paramétrage, l'utilisateur indiquera préalablement quelles sont les données d'usage qu'il souhaite voire recopiées, quelles sont les données d'usage qu'il souhaite voire supprimées, quelles sont les ressources qu'il souhaite voire déconnectées.

Par ressources sécurisées, on entend des contenus, des applications ou encore des services Internet nécessitant l'accès de l'utilisateur par authentification de ce dernier. Les informations de paramétrage consistent alors dans les différentes données d'authentification nécessaires pour accéder à ces contenus, applications ou services. L'utilisateur pourra décider contenu par contenu, application par application ou bien service par service s'il communique ou non les données d'authentification correspondantes.

Selon encore un autre mode de réalisation particulier, au moins certaines des données d'usage du terminal ayant été utilisé par l'utilisateur antérieur qui ont été récupérées sont sélectionnées à partir des informations de paramétrage du terminal associées à l'utilisateur antérieur pour configurer le terminal dans l'état de fonctionnement où ce dernier était lorsque l'utilisateur antérieur a fini de l'utiliser à un instant précédent l'instant courant.

Une telle disposition permet avantageusement de rejouer, sur le terminal en possession de l'utilisateur courant à l'instant courant, tout au partie des actions mises en œuvre précédemment par l'utilisateur antérieur, lorsque ce dernier était en possession du terminal à un instant précédent l'instant courant. Telle ou telle action est rejouée en fonction des autorisations contenues dans les informations de paramétrage associées à l'utilisateur antérieur.

Selon encore un autre mode de réalisation particulier, pour chaque donnée d'usage du terminal ayant été utilisée par l'utilisateur antérieur qui a été récupérée, est mis en œuvre ce qui suit :
- sélectionner une donnée d'usage à partir des informations de paramétrage dudit terminal associées à l'utilisateur antérieur,
- configurer le terminal avec ladite donnée d'usage sélectionnée dans l'état de fonctionnement où le terminal était lorsque l'utilisateur antérieur a fini de l'utiliser à un instant précédent l'instant courant, uniquement si l'utilisation d'une même donnée d'usage du terminal est requise par l'utilisateur courant,
- appliquer un traitement de confidentialité à ladite donnée d'usage sélectionnée.

Une telle disposition permet avantageusement de rejouer au cas par cas sur le terminal en possession de l'utilisateur courant à l'instant courant, les actions mises en œuvre précédemment par l'utilisateur antérieur lorsqu'il était en possession du terminal à un instant précédent l'instant courant, uniquement lorsqu'elles sont de la même nature que les actions requises par l'utilisateur courant. Par exemple, si l'utilisateur courant lance un navigateur Internet parmi plusieurs disponibles sur le terminal, seul l'historique de navigation propre à ce navigateur Internet et associé à l'utilisateur antérieur sera activé, à partir du moment où cette activation a été autorisée par l'utilisateur antérieur dans les informations de paramétrage qui lui sont associées. Un traitement de confidentialité sera alors appliqué à l'historique de navigation de l'utilisateur antérieur, tel que par exemple un recopiage de l'historique de navigation dans un espace de stockage associé à l'utilisateur antérieur, et/ou la suppression dudit terminal de cet historique de navigation.

Selon encore un autre mode de réalisation particulier, pour tout utilisateur considéré, courant ou antérieur, lors de la récupération des données d'usage, au moins certaines données d'usage sont configurées selon un format qui est utilisable par le terminal à l'instant courant.

Une telle disposition permet, lorsque des données d'usage ont été générées avant l'instant courant par un moyen support d'un terminal de communication qui est différent du moyen support de ce même terminal de communication ou d'un autre terminal de communication qui sont aptes à générer ces données d'usage à l'instant courant, de rendre ces données d'usage compatibles avec leur utilisation à l'instant courant.

Selon encore un autre mode de réalisation particulier, pour tout utilisateur considéré, courant ou antérieur, les informations de paramétrage associées à l'utilisateur considéré diffèrent selon le type de terminal susceptible d'être utilisé par l'utilisateur considéré.

Une telle disposition permet à un utilisateur de prédéfinir des informations de paramétrage sur ses données d'usage qui sont différentes en fonction du terminal qu'il est susceptible d'utiliser. Par exemple, l'utilisateur prédéfinira des informations de paramétrage plus souples en association avec un terminal qu'il utilise en exclusivité, autrement dit qu'il ne partage pas avec d'autres utilisateurs. En revanche, il prédéfinira des informations de paramétrage plus contraignantes en association avec un terminal qu'il partage avec d'autres utilisateurs. Lorsqu'il s'agit d'informations de paramétrage préétablies par défaut, celles-ci peuvent également être différentes selon le type de terminal.

Les différents modes ou caractéristiques de réalisation précités peuvent être ajoutés indépendamment ou en combinaison les uns avec les autres, au procédé d'activation automatique tel que défini ci-dessus.

L'invention concerne également un dispositif d'activation automatique de la configuration d'un terminal de communication qui est personnalisée en fonction d'un utilisateur courant du terminal.

Un tel dispositif d'activation automatique est remarquable en ce qu'il comprend un circuit de traitement qui est agencé pour :
- identifier à un instant courant l'utilisateur courant en possession du terminal,
- récupérer des informations de paramétrage du terminal qui ont été prédéfinies par l'utilisateur courant identifié en tant que règles de récupération de données d'usage du terminal,
- récupérer des données d'usage d'au moins un terminal de communication ayant été utilisé par l'utilisateur courant antérieurement à l'instant courant, en fonction desdites règles de récupération,
- configurer le terminal que l'utilisateur courant a en sa possession avec les données d'usage récupérées en fonction desdites règles.

L'invention concerne également un terminal de communication contenant le dispositif d'activation automatique précité.

L'invention concerne également un programme d'ordinateur pour mettre en œuvre des instructions de code de programme pour l'exécution des étapes du procédé d'activation automatique selon l'invention, lorsque le programme est exécuté dans un dispositif d'activation automatique.

Un tel programme peut utiliser n'importe quel langage de programmation et être sous la forme de code source, code objet, ou de code intermédiaire entre code source et code objet, tel que dans une forme partiellement compilée, ou dans n'importe quelle autre forme souhaitable.

L'invention concerne également un support d'enregistrement lisible par un ordinateur sur lequel est enregistré un programme d'ordinateur, ce programme comportant des instructions adaptées à la mise en œuvre des étapes du procédé d'activation automatique selon l'invention, lorsque le programme est exécuté dans un dispositif d'activation automatique tel que mentionné ci-dessus.

Les supports d'enregistrement peuvent être n'importe quelle entité ou dispositif capable de stocker le programme. Par exemple, le support peut comporter un moyen de stockage, tel qu'une ROM, par exemple un CD ROM ou une ROM de circuit microélectronique, une clé USB ou encore un moyen d'enregistrement magnétique, par exemple un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé d'activation automatique précité.

### Liste des figures

D'autres avantages et caractéristiques de l'invention apparaîtront plus clairement à la lecture de la description suivante de plusieurs modes de réalisation particuliers de l'invention, donnés à titre de simples exemples illustratifs et non limitatifs, et des dessins annexés, parmi lesquels :
- la figure 1A présente de façon schématique un premier contexte d'usage dans lequel est mis en œuvre le procédé d'activation automatique d'un terminal de communication, selon l'invention ;
- la figure 1B présente de façon schématique un deuxième contexte d'usage dans lequel est mis en œuvre le procédé d'activation automatique d'un terminal de communication, selon l'invention ;
- la figure 2 présente de façon schématique le déroulement d'un procédé d'activation automatique d'un terminal de communication, selon un mode de réalisation de l'invention ;
- la figure 3 présente de façon schématique le déroulement d'un procédé de traçage de l'utilisation d'un terminal de communication par un utilisateur courant ;
- la figure 4 présente de façon schématique le déroulement d'un procédé d'activation automatique d'un terminal de communication, selon un autre mode de réalisation de l'invention ;
- la figure 5 présente la structure simplifiée d'un dispositif d'activation automatique de la configuration d'un terminal de communication selon un mode de réalisation de l'invention.

### Description de modes de réalisation particuliers de l'invention

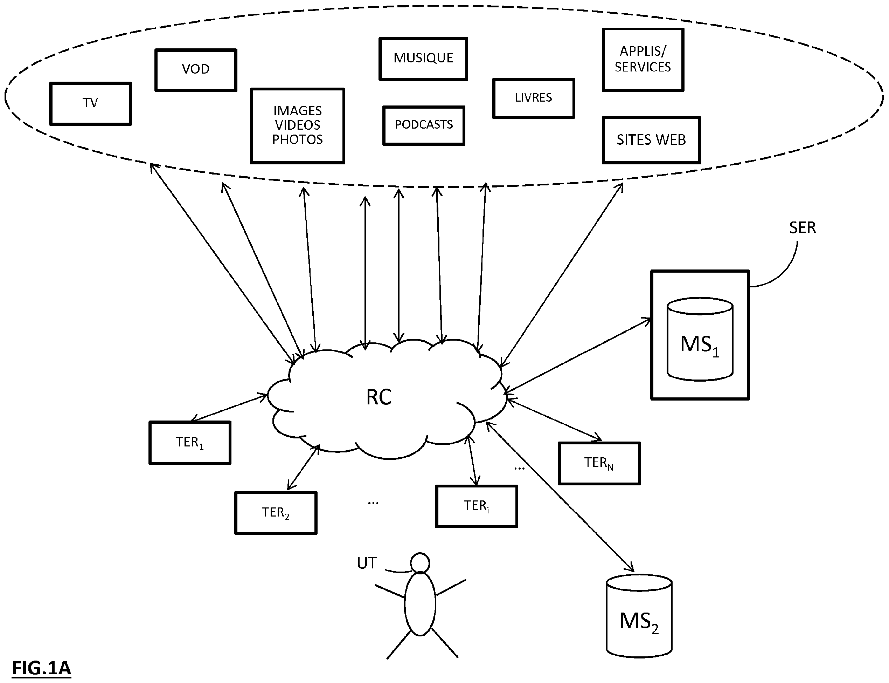

En relation avec la figure 1A, on présente un premier contexte d'usage dans lequel est mis en œuvre le procédé d'activation automatique de la configuration d'un terminal de communication selon l'invention.

Selon ce premier contexte d'usage, un utilisateur UT dispose de plusieurs terminaux de communication TER₁, TER₂, ..., TERᵢ,..., TER_{N}, tel que 1≤i≤N, dont il a l'usage exclusif. Chacun de ces terminaux est apte à accéder à différentes ressources sécurisées ou non, via un réseau de communication RC tel que par exemple de type IP (abréviation anglaise de « Internet Protocol »). De telles ressources sont à titre non exhaustif :
- des contenus proposés par une plateforme de service, via un réseau de communication RC, tels que par exemple des contenus télévisuels TV, notamment ceux à diffusion programmée dans une grille de programmes, des catalogues VOD, des catalogues de vidéos et/ou d'images et/ou de photos, des catalogues de musique, des catalogues de podcasts, des catalogues de livres numériques, des catalogues d'applications et/ou de services,
- des comptes de l'utilisateur UT associés respectivement à des applications installées sur tout ou partie des terminaux TER₁, TER₂, ..., TERᵢ,..., TER_{N},
- des services Internet en accès libre ou sécurisé, tels que par exemple la messagerie électronique de l'utilisateur UT, le commerce en ligne, la météo en ligne, la bourse en ligne, etc...

En outre, selon ce premier contexte d'usage, l'utilisateur UT est amené à paramétrer selon ses préférences d'usage des éléments propres au terminal lui-même. A titre d'exemple non exhaustif, l'utilisateur est apte :
- à configurer tel fond d'écran pour un terminal donné qu'il utilise plus souvent qu'un autre et tels autres fonds d'écran pour les autres terminaux, soit respectivement, soit communément ;
- à configurer tel mode de notification des appels entrants pour le terminal qu'il utilise le plus souvent et tels autres modes de notification des appels entrants pour les autres terminaux, soit respectivement, soit communément ;
- à créer tel groupe de contacts dans le répertoire du terminal qu'il utilise le plus souvent, et tel autre groupe de contacts dans le répertoire de chacun des autres terminaux, soit respectivement, soit communément ;
- à installer tels logiciels ou applications pour le terminal qu'il utilise le plus souvent et tels autres logiciels ou applications sur les autres terminaux, certains de ces logiciels ou certaines de ces applications pouvant être communs à tout ou partie desdits terminaux ;
- à installer au moins un navigateur Internet d'un premier type sur le terminal qu'il utilise le plus souvent et au moins un navigateur Internet d'un deuxième type sur tout ou partie des autres terminaux ;
- à créer tels liens Internet favoris sur le terminal qu'il utilise le plus souvent et tels autres liens Internet favoris sur les autres terminaux, certains de ces liens Internet favoris pouvant être communs à tout ou partie desdits terminaux ;
- etc.

Chacun des terminaux précités comprend des moyens de connexion au réseau de communication RC, via par exemple un réseau local (non représenté), par exemple sans fil, en particulier du type WiFi ou CPL (abréviation de « courants porteurs en ligne »). En variante, les moyens de connexion sont par exemple, de type x-DSL, fibre ou encore 3G et 4G.

L'ensemble des terminaux TER₁, TER₂, ..., TERᵢ,..., TER_{N} comprend par exemple à titre non exhaustif :
- au moins un téléphone portable, et/ou
- au moins un smartphone (« téléphone intelligent »), et/ou
- au moins une tablette, et/ou
- au moins un ordinateur portable, et/ou
- au moins un ordinateur personnel de type PC, et/ou
- une télévision connectée,
- etc....

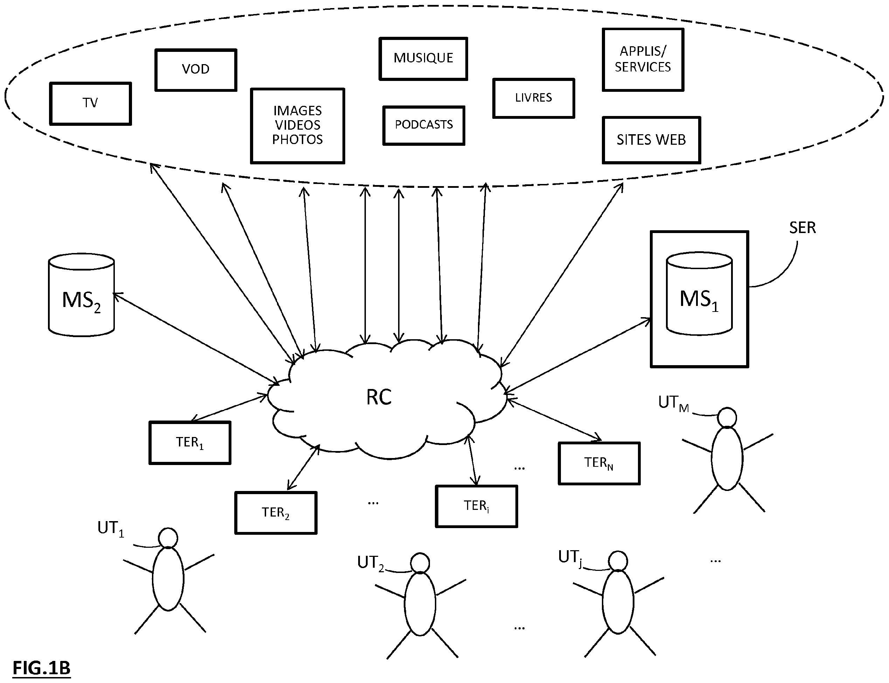

En relation avec la figure 1B, on présente maintenant un deuxième contexte d'usage dans lequel est mis en œuvre le procédé d'activation automatique de la configuration d'un terminal de communication selon l'invention.

Selon ce deuxième contexte d'usage, une pluralité d'utilisateurs UT₁, UT₂,..., UTⱼ, ..., UT_{M}, tel que 1≤j≤M, partage l'utilisation de tout ou partie desdits terminaux TER₁, TER₂, ..., TERᵢ,..., TER_{N}.

A titre non exhaustif, les utilisateurs UT₁, UT₂,..., UTⱼ, ..., UT_{M} sont les membres d'une même famille, les salariés d'une entreprise, les membres d'une collectivité, les habitants d'une même commune, etc...

Chacun des utilisateurs UT₁, UT₂,..., UTⱼ, ..., UT_{M} est amené, selon ce deuxième contexte d'usage, à accéder à différentes ressources sécurisées ou non, telles que celles déjà décrites en liaison avec la figure 1A, à l'aide d'un des terminaux TER₁, TER₂, ..., TERᵢ,..., TER_{N}. En outre, selon ce deuxième contexte d'usage, Chacun des utilisateurs UT₁, UT₂,..., UTⱼ, ..., UT_{M} est amené à paramétrer selon ses préférences d'usage des éléments propres à chaque terminal qu'il souhaite utiliser, de la même façon que l'utilisateur UT de la figure 1A.

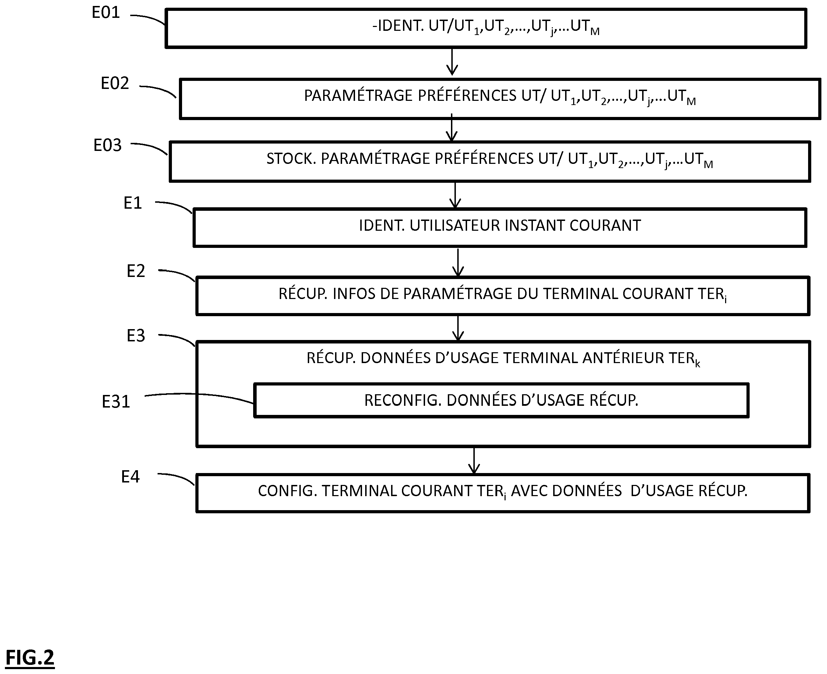

En relation avec la figure 2, on présente maintenant les étapes du procédé d'activation automatique de la configuration d'un terminal de communication en fonction d'un utilisateur courant du terminal, conformément à un mode de réalisation selon l'invention.

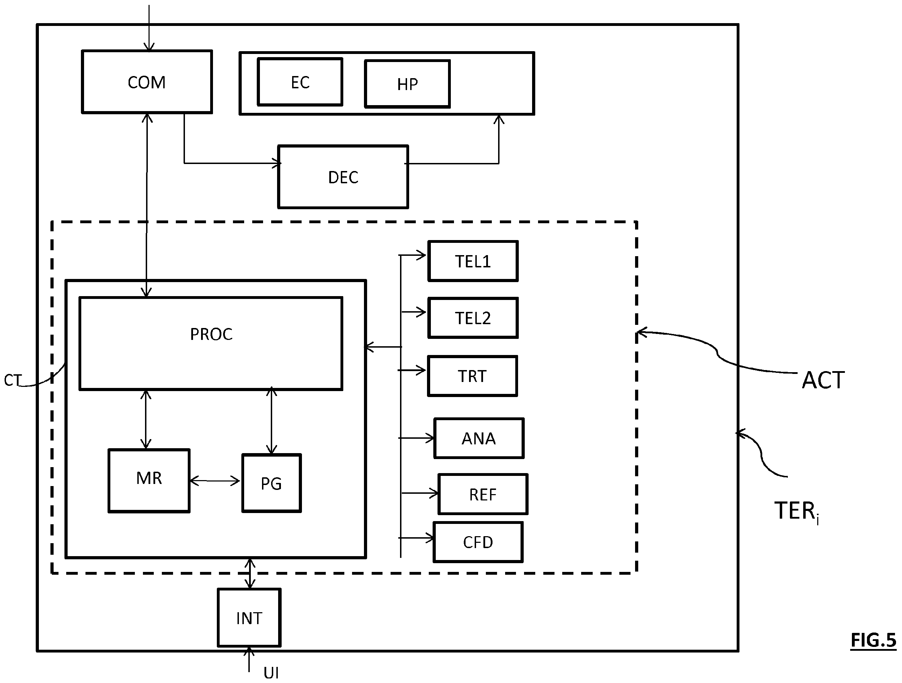

Dans le mode de réalisation représenté, ledit procédé d'activation automatique est mis en œuvre par le dispositif ACT représenté sur la figure 5, lequel sera décrit en détail plus loin dans la description.

Au cours d'une première étape préalable E01 représentée à la figure 2, l'utilisateur UT (figure 1A), ainsi que tout ou partie des utilisateurs UT₁, UT₂,..., UTⱼ, ..., UT_{M} (figure 1B), déclare ses données d'identification utilisateur en liaison avec la pluralité de terminaux TER₁, TER₂, ..., TERᵢ,..., TER_{N} et paramètre ses préférences d'utilisation de la pluralité de terminaux TER₁, TER₂, ..., TERᵢ,..., TER_{N}.

La déclaration des données d'identification d'un utilisateur donné par rapport à un terminal donné consiste par exemple, pour l'utilisateur donné, à accéder, via un terminal de communication quelconque, à une page Web dédiée d'un site hébergé par un fournisseur de service qui propose le service d'activation automatique de la configuration d'un terminal, et de saisir ses données d'identification, soit terminal par terminal, soit pour l'ensemble des terminaux TER₁, TER₂, ..., TERᵢ,..., TER_{N}, soit pour un ou plusieurs ensembles de terminaux choisis parmi la pluralité de terminaux TER₁, TER₂, ..., TERᵢ,..., TER_{N}.

De façon connue en soi, de telles données d'identification contiennent un identifiant de l'utilisateur donné et un mot de passe, en association avec le terminal à utiliser.

En variante, de telles données d'identification peuvent être associées à une application ou à un composant applicatif installé au préalable sur chacun des terminaux susceptibles d'être utilisés, qui, une fois activé, permet d'identifier l'utilisateur donné.

En variante encore, de telles données d'identification contiennent le code de la carte SIM (abréviation anglaise de "subscriber identity module") d'un des terminaux de ladite pluralité de terminaux TER₁, TER₂, ..., TERᵢ,..., TER_{N} que l'utilisateur utilise de façon privilégiée à titre exclusif ou non, tel qu'un smartphone par exemple. Un tel code permettrait alors d'identifier automatiquement l'utilisateur donné sur les autres terminaux qu'il souhaite utiliser grâce à une interface de communication de type sans fil (ex: bluetooth, infra-rouge, etc...) installée dans ces autres terminaux, qui lors d'une simple approche avec le terminal privilégié et équipé en outre d'une interface de communication sans fil compatible avec celle installée sur les autres terminaux, permet de déterminer les données d'identification associées au terminal privilégié et ainsi de reconnaître automatiquement l'utilisateur donné.

En variante encore, de telles données d'identification sont :
- des données associées à une clé USB d'authentification appartenant à l'utilisateur donné,
- un code barre affiché sur un objet de l'utilisateur donné, par exemple un badge ou un bracelet, et identifiant l'utilisateur donné depuis la caméra de chaque terminal TER₁, TER₂, ..., TERᵢ,..., TER_{N},
- des données biométriques de l'utilisateur donné,
- etc....

Au cours d'une seconde étape préalable E02 représentée à la figure 2, en association avec les données d'identification utilisateur fournies précédemment, pour chaque utilisateur concerné, il est procédé au paramétrage des préférences d'utilisation de la pluralité de terminaux TER₁, TER₂, ..., TERᵢ,..., TER_{N}.

A cet effet, il est procédé à la fourniture d'informations de paramétrage associées à un utilisateur donné, via par exemple, l'accès de ce dernier à une autre page Web dédiée du fournisseur de service qui propose le service d'activation automatique de la configuration d'un terminal personnalisée en fonction de l'utilisateur du terminal. De telles informations de paramétrage consistent en la sélection, par l'utilisateur donné, de règles de récupération des données d'usage qui sont générées lors de l'utilisation, par l'utilisateur donné, d'un terminal considéré dans la pluralité de terminaux TER₁, TER₂, ..., TERᵢ,..., TER_{N} ou plus précisément, des données d'usage qui sont générées soit lors de l'activation, par l'utilisateur donné, d'éléments internes au terminal considéré, soit lors de l'utilisation, par l'utilisateur donné, des moyens d'accès Internet contenus dans ledit terminal considéré, tels qu'un ou plusieurs navigateurs I nternet.

Comme expliqué plus haut dans la description, de telles données d'usage comprennent à titre non exhaustif :
- le fond d'écran, et/ou
- le répertoire de contacts, et/ou
- des groupes de contact, et/ou
- l'historique des appels émis/reçus, et/ou
- l'historique des messages SMS émis/reçus, et/ou
- des liens Internet favoris, et/ou
- des données d'accès à des comptes de l'utilisateur, telles que par exemple des informations d'authentification à des applications et/ou sites de l'utilisateur, et/ou
- des données d'historique d'usage Internet générées lors de l'utilisation de services Internet, tels que par exemple la messagerie électronique, le commerce en ligne, la Vidéo à la Demande, ou bien encore générées lors de la navigation sur le Web.

S'agissant des données d'historique d'usage Internet, leur récupération est destinée d'un côté à améliorer la navigation et les vitesses de téléchargement des pages Internet, de l'autre côté, à constituer des informations de traçage de l'utilisateur sur le Web. Dans un menu déroulant par exemple, l'utilisateur donné peut préciser :
- s'il accepte d'être tracé sur tous les sites, applications, services Internet,
- s'il accepte d'être tracé seulement sur certains sites et/ou certaines applications et/ou certains services Internet,
- s'il n'accepte pas d'être tracé sur certains sites et/ou certaines applications et/ou certains services Internet.

Les informations de paramétrage peuvent être définies terminal par terminal. Auquel cas, il est nécessaire d'identifier chaque terminal lors de la fourniture desdites informations de paramétrage.

A titre d'exemples non limitatifs et de façon connue en soi, une telle identification consiste dans le code associé à un composant technique (puce, voire même une carte SIM) contenu dans le terminal considéré et permettant son identification, ou encore le code d'un composant logiciel quelconque implémenté dans le terminal considéré et qui permettrait de l'identifier.

En variante, l'utilisateur donné pourrait renommer l'identification du terminal considéré selon un nom plus compréhensible par l'utilisateur donné. Par exemple, si le terminal considéré est une tablette familiale dont l'identification technique unique est par exemple « HG575Ujg », l'utilisateur donné pourrait renommer manuellement cette identification technique en "Tablette maison".

En variante encore, Les informations de paramétrage peuvent être définies en fonction de la typologie des terminaux considérés.

Dans le cas par exemple de la figure 1A, où les terminaux TER₁, TER₂, ..., TERᵢ,..., TER_{N} sont utilisés exclusivement par l'utilisateur UT, l'utilisateur UT pourrait sélectionner des règles de récupération des données d'usage moins contraignantes d'un point de vue de la confidentialité que si l'utilisation des terminaux TER₁, TER₂, ..., TERᵢ,..., TER_{N} était partagée. A cet effet, l'utilisateur UT sélectionne les règles de récupération des données d'usage suivantes le concernant :
- non suppression des données d'historique d'usage Internet sur l'ensemble des terminaux TER₁, TER₂, ..., TERᵢ,..., TER_{N},
- non suppression des connexions sur des comptes de réseaux sociaux ou autres qui ont été établies avec les terminaux TER₁, TER₂, ..., TERᵢ,..., TER_{N}.

Dans le cas par exemple de la figure 1B, où l'utilisation des terminaux TER₁, TER₂, ..., TERᵢ,..., TER_{N} est partagée entre tout ou partie des utilisateurs UT₁, UT₂,..., UTⱼ, ..., UT_{M}, un utilisateur considéré UTⱼ pourrait sélectionner des règles de récupération des données d'usage plus contraignantes d'un point de vue de la confidentialité que s'il ne partageait pas l'utilisation des terminaux TER₁, TER₂, ..., TERᵢ,..., TER_{N}. A cet effet, l'utilisateur UTⱼ sélectionne les règles de récupération des données d'usage suivantes :
- suppression des données d'historique d'usage Internet sur l'ensemble des terminaux TER₁, TER₂, ..., TERᵢ,..., TER_{N},
- suppression des connexions sur des comptes de réseaux sociaux ou autres établies avec les terminaux TER₁, TER₂, ..., TERᵢ,..., TER_{N}.

En variante, dans le cas où l'utilisateur UTⱼ utiliserait exclusivement un des terminaux TER₁, TER₂, ..., TERᵢ,..., TER_{N}, par exemple le terminal TERᵢ, l'utilisateur UTⱼ sélectionne les règles de récupération des données d'usage suivantes le concernant :
- non suppression des données d'historique d'usage Internet sur le terminal TERᵢ,
- suppression des données d'historique d'usage Internet sur les terminaux restants TER₁, TER₂, ..., TER_{N},
- non suppression des connexions sur des comptes de réseaux sociaux ou autres établies avec le terminal TERᵢ,
- suppression des connexions sur des comptes de réseaux sociaux ou autres établies avec les terminaux restants TER₁, TER₂, ..., TER_{N}.

Selon une autre variante encore, les informations de paramétrage pourraient être définies à un niveau plus fin que le terminal lui-même, par exemple au niveau du et/ou des navigateurs installés dans le terminal ou bien encore au niveau du et/ou des applications installées dans ledit terminal. A cet effet, pour un terminal considéré parmi les terminaux TER₁, TER₂, ..., TERᵢ,..., TER_{N}, un utilisateur donné peut définir des règles de récupération ou de non récupération des données d'usage générées au niveau de tel ou tel navigateur ou encore de telle ou telle application.

Au lieu d'être fournies par l'utilisateur, les informations de paramétrage pourraient être fournies par défaut en fonction du contexte d'utilisation d'un terminal considéré, par exemple un terminal utilisé exclusivement par un utilisateur ou bien un terminal utilisé de façon partagée.

Bien entendu, l'utilisateur concerné par ces informations de paramétrage fournies par défaut peut y apporter des modifications manuelles, via des groupes de fonctionnalités prédéfinies en dépendance du contexte d'utilisation des terminaux (ex : usage exclusif ou partagé, profilage publicitaire, anonymat) et en dépendance des types de fonctionnalités recherchées qui sont relatives à la gestion de ses comptes utilisateur, de ses applications, des différentes ressources Internet auxquelles il accède.

En variante encore, les informations de paramétrage associées à un utilisateur pourraient être implicites et masquées à cet utilisateur. Par exemple, dans un but de protéger automatiquement et gratuitement son anonymat selon certains axes, seraient prédéfinies par défaut la déconnexion automatique de tel ou tel de ses comptes, la suppression des données d'usage Internet sur tel ou tel sites Web, etc... Une telle protection se ferait en contrepartie de l'optimisation du profilage publicitaire de l'utilisateur sur d'autres axes. A cet effet, serait prédéfinie par défaut la récupération de ses données d'usage sur tous les autres sites Web visités par l'utilisateur.

Au cours d'une troisième étape préalable E03 représentée sur la figure 2, les données d'identification fournies à l'étape E01 et les informations de paramétrage définies à l'étape E02 sont enregistrées dans un module de stockage MS₁ tel que représenté sur les figures 1A et 1B. Il peut s'agir par exemple d'une base de données d'un serveur SER accessible par les terminaux TER₁, TER₂, ..., TERᵢ,..., TER_{N}, via le réseau de communication RC.

D'autres variantes qu'un serveur accessible en réseau seraient possibles et il n'entre pas dans l'objectif de cette demande de brevet de décrire toutes les variantes potentielles.

Selon une autre des variantes préférées toutefois, le module de stockage MS₁ pourrait être implémenté soit dans un terminal dédié (clé USB ou bracelet de stockage connecté, ...), soit dans un terminal à usage exclusif sélectionné parmi les terminaux TER₁, TER₂, ..., TERᵢ,..., TER_{N}. Le module de stockage MS₁ serait alors accessible via un réseau de proximité (ex : bluetooth, liaison infra rouge, etc...) entre le terminal qui contient ledit module de stockage MS₁ et un des terminaux TER₁, TER₂, ..., TERᵢ,..., TER_{N} susceptible d'être utilisé à un instant courant par un utilisateur considéré courant, afin de permettre une récupération des données d'identification et des informations de paramétrage propres à cet utilisateur considéré courant, ceci afin de mettre en œuvre les étapes du procédé d'activation automatique selon l'invention qui vont être décrites ci-après.

Suite aux étapes préalables décrites ci-dessus, on considère maintenant qu'un utilisateur souhaite utiliser, à un instant courant, l'un des terminaux TER₁, TER₂, ..., TERᵢ,..., TER_{N}, par exemple le terminal TERᵢ. Cet utilisateur, qu'on appellera utilisateur courant, est soit l'utilisateur UT de la figure 1A, soit un des utilisateurs UT₁, UT₂,..., UTⱼ, ..., UT_{M} de la figure 1B.

En référence à la figure 2, il est procédé, en E1, à l'identification, à l'instant courant, de l'utilisateur courant en possession du terminal.

L'identification E1 est mise en œuvre en fonction des données d'identification qui ont été fournies par l'utilisateur courant à l'étape E01 précitée en association avec le terminal TERᵢ. Selon un exemple, l'utilisateur saisit sur le clavier du terminal TERᵢ un identifiant et un mot de passe.

En E2, il est procédé à la récupération des informations de paramétrage du terminal TERᵢ qui ont été prédéfinies par l'utilisateur courant identifié en E1.

A cet effet, il est procédé à une interrogation de la base de données MS₁ de la figure 1A ou 1B en vue de récupérer ces informations sur le terminal TERᵢ et de les stocker dans une mémoire tampon dédiée du terminal TERᵢ.

En E3, il est procédé à la récupération des données d'usage d'un autre terminal de communication TERₖ, tel que 1≤k≤N, lequel a été utilisé par l'utilisateur courant antérieurement à l'instant courant, en application des informations de paramétrage qui ont été récupérées.

La récupération E3 est mise en œuvre par extraction de ces données d'usage à partir d'un module de stockage MS₂ représenté sur les figures 1A ou 1B, dans lequel ont été enregistrées préalablement ces données d'usage. Un tel module de stockage MS₂ est par exemple une base de données contenue dans le serveur SER des figures 1A et 1B. En variante, le module de stockage MS₂ peut être contenu dans un serveur différent du serveur SER ou encore dans un des terminaux TER₁, TER₂, ..., TERᵢ,..., TER_{N} considéré comme terminal maître.

Selon l'invention, de telles données d'usage sont associées respectivement à des actions ayant été mises en œuvre sur le terminal antérieur TERₖ par l'utilisateur courant à un instant précédent l'instant courant et aux moyens supports correspondants de génération de ces actions. Chacune de ces actions est stockée en association avec l'instant où celle-ci a été mise en œuvre.

Ainsi, le module de stockage MS₂, pour ce qui est du terminal antérieur TERₖ, dispose d'un historique de traçage des actions mises en œuvre par l'utilisateur courant sur ce terminal, sur toute la durée d'utilisation de ce terminal, avant que l'utilisateur ne change de terminal et choisisse d'utiliser le terminal TERᵢ. A titre non exhaustif, selon un mode de réalisation, un moyen support est par exemple un navigateur Internet d'un certain type et l'historique de traçage consiste simplement en un historique de la navigation de l'utilisateur courant sur le Web à l'aide du terminal TERₖ. Selon un autre exemple, un moyen support consiste dans un cookie spécifique à un site Web particulier sur lequel l'utilisateur courant a navigué antérieurement à l'instant courant, à l'aide du terminal TERₖ, et l'historique de traçage consiste dans la succession chronologique de liens URL (abréviation anglaise de « Uniform Resource Locator ») activés par l'utilisateur antérieurement à l'instant courant, à l'aide du terminal TERₖ. Selon encore un autre exemple, un moyen support consiste dans une mémoire tampon du terminal antérieur TERₖ dans laquelle l'utilisateur courant a créé un groupe de contacts antérieurement à l'instant courant à l'aide du terminal TERₖ et l'historique de traçage consiste dans les données de contacts créées au fur et à mesure par l'utilisateur courant à l'aide du terminal TERₖ. Selon encore un autre exemple, dans le cas plus particulier où le terminal TERₖ est un smartphone ou une tablette, un moyen support consiste dans une mémoire cache d'une application que l'utilisateur a activée antérieurement à l'instant courant à l'aide du terminal TERₖ et l'historique de traçage peut consister en un ensemble de données conservées dans cette mémoire cache.

En outre, lors de la récupération E3 de ces données d'usage, au moins certaines d'entre elles ou bien toutes, selon le contexte d'utilisation considéré, sont configurées en E31 selon un format qui est utilisable par le terminal TERᵢ. Une telle action est nécessaire dans le cas où par exemple :
- le terminal TERₖ serait doté d'un système d'exploitation différent de celui du terminal TERᵢ,
- l'historique de navigation est récupéré en association avec un navigateur d'un premier type installé dans le terminal TERₖ, alors que le terminal TERᵢ utilise en priorité un navigateur d'un deuxième type, le terminal TERᵢ étant doté ou non également du navigateur du premier type.

En E4, il est procédé à la configuration du terminal TERᵢ avec les données d'usage récupérées en E3. A cet effet, les actions associées aux données d'usage récupérées en E3 sont rejouées sur le terminal TERᵢ de façon transparente pour l'utilisateur courant, ce qui permet avantageusement à l'utilisateur courant de récupérer tout ou partie de la configuration du terminal TERₖ qu'il a utilisée antérieurement à l'instant courant.

Une telle configuration consiste par exemple à ouvrir de façon transparente pour l'utilisateur courant ses comptes applicatifs préférés, après avoir déconnecté éventuellement les utilisateurs déjà connectés antérieurement, à récupérer les historiques de navigation de l'utilisateur courant qui ont été générés sur un terminal antérieurement utilisé par ce dernier, puis à injecter ces historiques de navigation sur le terminal TERᵢ.

Selon un exemple de réalisation, la configuration E4 est mise en œuvre en une seule fois, avec toutes les données d'usage récupérées en E3.

Selon un autre exemple, afin de limiter les temps de réponse nécessaires pour rejouer l'ensemble des actions associées respectivement aux données d'usage récupérées, une ou plusieurs actions ne sont pas rejouées tant que l'utilisateur courant ne les requiert pas sur le terminal TERᵢ.

Selon un autre exemple, une ou plusieurs actions ne sont pas rejouées si la quantité de données Internet associée au forfait mobile de l'utilisateur courant est en passe d'être épuisée ou déjà épuisée.

Selon encore un autre exemple, dans le cas où le terminal TERₖ et le terminal TERᵢ disposent du même type de navigateur Internet et que l'utilisateur n'active ce navigateur Internet sur le terminal TERᵢ qu'à l'issue d'une certaine durée après l'instant courant, la récupération des données d'usage associées au navigateur Internet de même type du terminal TERₖ est déclenchée uniquement à l'issue de ladite certaine durée.

A l'issue du procédé d'activation automatique de la configuration du terminal TERᵢ qui vient d'être décrit ci-dessus, l'utilisateur courant peut ainsi bénéficier de la continuité du profilage publicitaire mis en œuvre précédemment sur le terminal TERₖ et continuer de cette manière à bénéficier avantageusement de l'affichage de publicités correspondant à ses centres d'intérêt. Une telle disposition est par ailleurs avantageuse pour les éditeurs de l'Internet fixe et/ou mobile, leur permettant d'augmenter leurs revenus publicitaires de façon conséquente.

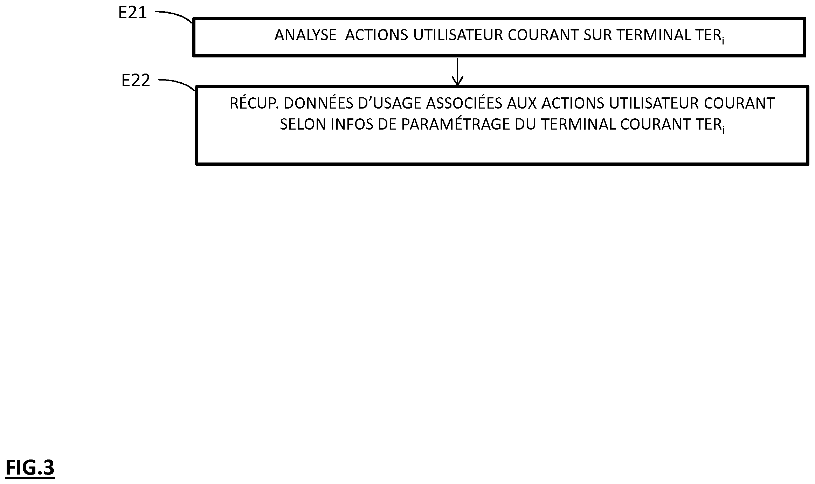

En référence maintenant à la figure 3, sont décrites les différentes actions mises en œuvre au niveau du terminal TERᵢ pendant toute la durée d'utilisation de ce terminal par l'utilisateur courant qui est comprise entre l'instant de début d'utilisation, où l'utilisateur est identifié par le terminal TERᵢ, et l'instant final d'utilisation, où l'utilisateur cesse d'utiliser le terminal pour une durée donnée.

En E21, entre l'instant de début d'utilisation et l'instant final d'utilisation, il est procédé à l'analyse des actions de l'utilisateur courant en relation avec le terminal TERᵢ. A titre non exhaustif, de telles actions consistent par exemple :
- à modifier le fond d'écran du terminal TERᵢ ;
- à configurer un mode de notification particulier des appels entrants sur le terminal TERᵢ, tel que par exemple en téléchargeant une sonnerie que l'utilisateur courant apprécie particulièrement ;
- à rajouter un contact dans le répertoire du terminal TERᵢ ;
- à installer une application sur le terminal TERᵢ ;
- à naviguer sur le Web avec un navigateur d'un type donné du terminal TERᵢ ;
- à ajouter un lien Internet favori sur le terminal TERᵢ ;
- etc.

En E22, il est procédé, pour une action donnée, à la récupération ou non d'une ou de plusieurs données d'usage correspondant à l'action donnée et au moyen support de ladite action donnée, en association avec l'instant où l'action a été mise en œuvre. Le fait de récupérer ou non cette et/ou ces données d'usage dépend des informations de paramétrage qui ont été récupérées en E2 à la figure 2.

Il est ainsi créé une ligne temporelle contenant successivement les données d'usage associées à chaque action de l'utilisateur courant, pour laquelle un suivi a été requis dans les informations de paramétrage fournies par ce dernier.

Par exemple, à titre non exhaustif, dans le cas où le terminal TERᵢ est un smartphone, l'activation par l'utilisateur courant d'une application installée dans ce dernier est référencée sur la ligne temporelle.

Selon un autre exemple, chaque lancement et fermeture de navigateurs Internet installés dans le terminal TERᵢ est également référencé sur ladite ligne temporelle si l'utilisateur courant en a fait la demande (par exemple dans l'objectif d'optimiser son ciblage publicitaire) dans le paramétrage préétabli en E02, ainsi que la suite d'actions au niveau de ces navigateurs, pour les sites Web mentionnés dans le paramétrage préétabli en E02, avec indication/conservation du type de paramétrage.

Une variante intéressante du procédé selon l'invention serait pour un même utilisateur et terminal, de mettre en œuvre le suivi sur différentes pistes de la même ligne temporelle, respectivement des différents types d'actions de l'utilisateur pour accéder à des ressources Internet avec le même terminal TERᵢ.

De telles pistes consisteraient par exemple, à titre non exhaustif, en :
- une piste liée à l'usage éventuel d'un navigateur d'un premier type,
- une autre piste liée à l'usage éventuel d'un navigateur d'un deuxième type, et ainsi de suite selon le nombre de navigateurs installés dans le terminal qu'a utilisés l'utilisateur,
- une piste liée à l'usage éventuel d'une application d'un premier type,
- une autre piste liée à l'usage éventuel d'une application d'un deuxième type, et ainsi de suite selon le nombre d'applications installées dans le terminal qu'a activées l'utilisateur.

Éventuellement, chaque piste pourrait se voir succéder différentes séquences, de façon éventuellement discontinues. Ce sera par exemple le cas si l'utilisateur courant lance, puis ferme le même navigateur une pluralité de fois entre l'instant de début d'utilisation et l'instant final d'utilisation du terminal TERᵢ.

Les données d'usage associées auxdites actions référencées sur la ligne temporelle ou les différentes pistes de la ligne temporelle sont enregistrées dans le module de stockage MS₂ qui a été décrit plus haut dans la description, en liaison avec les figures 1A et 1B. On dispose ainsi d'un suivi centralisé de tout ou partie des actions de l'utilisateur courant sur le terminal TERᵢ, en fonction des informations de paramétrage prédéfinies par ce dernier en E02.

A titre de variante, une ligne temporelle vierge serait simplement créée et il serait procédé à l'accès aux différentes actions de l'utilisateur courant via les moyens déjà en place sur les applications et navigateurs du terminal TERᵢ, à condition toutefois que lesdites actions soient horodatées, afin de pouvoir mettre en rapport l'horodatage de la ligne temporelle créée et les horodatages générés par lesdits moyens déjà en place. A titre non exhaustif, un tel moyen déjà en place consiste en un historique de navigation généré par un navigateur Internet installé dans le terminal TERᵢ et qui horodate chaque lien URL consulté. Dans la pratique toutefois, cela impliquerait que les différents terminaux TER₁, TER₂, ..., TERᵢ,..., TER_{N} aient accès chacun aux données des autres terminaux pour les récupérer. A cet effet, le module de stockage MS₂ dans lequel sont enregistrées les données d'usage de l'utilisateur courant en association avec les actions de ce dernier sur le terminal TERᵢ est de préférence installé sur un serveur distant, ou en variante sur un dispositif accessible à partir des différents terminaux TER₁, TER₂, ..., TERᵢ,..., TER_{N}, comme cela a déjà été mentionné plus haut dans la description.

Dans la pratique, des combinaisons de ces différentes variantes de suivi des actions de l'utilisateur courant sur le terminal TERᵢ seraient possibles.

Selon un contexte d'utilisation tel que celui illustré sur la figure 1B pour lequel le terminal TERᵢ est susceptible d'être partagé, il est en outre procédé à la déconnexion des ressources, telles que par exemple les comptes, applications et/ou services Internet, auxquelles l'utilisateur courant a accédé avec le terminal TERᵢ entre les instants de début et de fin d'utilisation, ainsi qu'à la suppression, du terminal TERᵢ, des données d'usage, telles que par exemple les traces et/ou historiques de connexion de l'utilisateur courant.

Selon un contexte d'utilisation tel que celui illustré sur la figure 1A pour lequel le terminal TERᵢ est utilisé exclusivement par l'utilisateur courant, ici UT, une telle déconnexion et une telle suppression ne sont pas nécessaires.

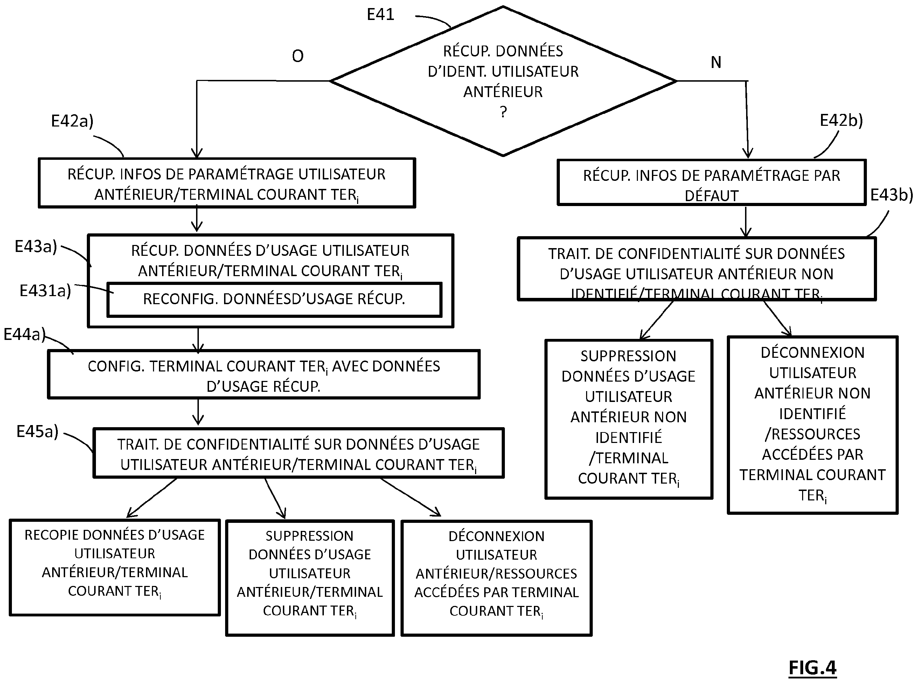

En référence maintenant à la figure 4 et à la figure 1B, est décrit un procédé d'activation automatique de la configuration du terminal TERᵢ, dans le cas où un utilisateur antérieur, différent de l'utilisateur courant, a utilisé le terminal TERᵢ avant l'instant courant.

En E41, le terminal TERᵢ vérifie si le module de stockage MS₂ a enregistré avant l'instant courant des données d'identification associées à un utilisateur ayant utilisé le terminal TERᵢ avant l'instant courant.

Si tel est le cas, en E42a), il est procédé à la récupération des informations de paramétrage du terminal TERᵢ qui sont associées à l'utilisateur antérieur identifié en E41.

A cet effet, il est procédé à une interrogation de la base de données MS₁ de la figure 1B, en vue de récupérer ces informations sur le terminal TERᵢ et de les stocker dans une mémoire tampon dédiée du terminal TERᵢ. Afin de garantir la confidentialité de ces informations vis-à-vis de l'utilisateur courant, ladite mémoire tampon n'est pas rendue accessible à l'utilisateur courant. En variante, si une mémoire tampon est commune à l'utilisateur courant et à l'utilisateur antérieur, les informations de paramétrage associées à l'utilisateur antérieur sont enregistrées dans un espace de stockage auquel l'utilisateur courant n'a pas accès. Un tel espace de stockage peut être verrouillé en accès grâce par exemple à une clé de décryptage.

En E43a), de façon similaire à l'étape E3 de la figure 2, il est procédé à la récupération des données d'usage du terminal de communication TERᵢ qui a été utilisé par l'utilisateur antérieur avant l'instant courant, en application des informations de paramétrage qui ont été récupérées en E42a).

La récupération E43a) est mise en œuvre par extraction de ces données d'usage à partir du module de stockage MS₂ de la figure 1B, dans lequel ont été enregistrées préalablement ces données d'usage.

De façon similaire à ce qui a déjà été expliqué plus haut dans la description, de telles données d'usage sont associées respectivement à des actions ayant été mises en œuvre par l'utilisateur antérieur sur le terminal TERᵢ à un instant précédent l'instant courant et aux moyens supports correspondants de génération de ces actions. Chacune de ces actions est stockée dans le module de stockage MS₂ en association avec l'instant où celle-ci a été mise en œuvre.

De façon similaire à l'étape E31 de la figure 2, lors de la récupération E43a) de ces données d'usage, au moins certaines d'entre elles ou bien toutes, selon le contexte d'utilisation considéré, sont configurées en E431a) selon un format qui est utilisable par le terminal TERᵢ.

En E44a), il est procédé à une configuration du terminal TERᵢ à l'aide des données d'usage récupérées en E43a), ce qui a pour effet de configurer le terminal TERᵢ dans l'état de fonctionnement où ce dernier était lorsque l'utilisateur antérieur a fini de l'utiliser à un instant précédent l'instant courant. Une telle configuration est mise en œuvre de façon similaire à l'étape E4 de la figure 2 et, pour cette raison, ne sera pas décrite à nouveau en détail.

Afin de garantir la confidentialité des données d'usage de l'utilisateur antérieur vis-à-vis de l'utilisateur courant, la mémoire tampon dans laquelle sont enregistrées ces données n'est pas rendue accessible à l'utilisateur courant. En variante, si une mémoire tampon est commune à l'utilisateur courant et à l'utilisateur antérieur, les données d'usage associées à l'utilisateur antérieur sont enregistrées dans un espace de stockage auquel l'utilisateur courant n'a pas accès. Un tel espace de stockage peut être verrouillé en accès grâce par exemple à une clé de décryptage.

En E45a), il est appliqué un traitement de confidentialité aux données d'usage récupérées en fonction des informations de paramétrage récupérées en E42a). Un tel traitement met en œuvre ce qui suit :
- recopier tout ou partie desdites données d'usage récupérées en E43a) dans un espace de stockage associé à l'utilisateur antérieur, et/ou
- supprimer dudit terminal TERᵢ tout ou partie desdites données d'usage récupérées en E43a), et/ou
- déconnecter l'utilisateur antérieur de tout ou partie des ressources sécurisées auxquelles l'utilisateur antérieur a accédé à l'aide du terminal TERᵢ.

En ce qui concerne l'action de recopiage, il peut s'agir par exemple de l'historique d'usage Internet de l'utilisateur antérieur qui pourra ainsi être réutilisé sur le terminal TERᵢ une fois que l'utilisateur courant aura fini de l'utiliser après l'instant final ou bien encore sur un autre terminal.

En ce qui concerne l'action de suppression, il peut également s'agir de l'historique d'usage Internet de l'utilisateur antérieur par rapport au terminal TERᵢ.

En ce qui concerne l'action de déconnexion, il peut s'agir de tous les comptes de l'utilisateur antérieur, que ceux-ci soient conservés au niveau de navigateurs Internet en regard des sites Web correspondants, par exemple au niveau de cookies spécifiques des services concernés, ou au niveau d'applications correspondantes (sur le cache desdites applications par exemple).

Selon un mode de réalisation possible, tout ou partie des données d'usage relatives à l'utilisateur antérieur pourraient avoir être stockées directement dans le terminal TERᵢ en association avec le/les service(s) internet, le/les application(s) ou le/les logiciel(s) par rapport auxquels ces données d'usage ont été générées, dans par exemple des mémoires cache correspondantes. Par conséquent, dans une telle situation, le traitement confidentiel consistera à titre non exhaustif, par exemple, à :
- accéder à l'espace de stockage de l'historique de navigation Web de l'utilisateur antérieur vis-à-vis du terminal TERᵢ et cache de ce navigateur,
- récupérer les historiques concernés par l'utilisateur antérieur conformément aux informations de paramétrage récupérées en E42a),
- appliquer lesdits paramétrages aux historiques concernés, par exemple supprimer des historiques les traces internet correspondant à l'utilisation du terminal TERᵢ par l'utilisateur antérieur, à l'exclusion des autres traces, après les avoir préalablement recopiées dans le module de stockage MS₂ de la figure 1B.

Selon un autre exemple, le traitement confidentiel consistera, pour les données d'usage générées lors de l'activation d'une application autonome installée dans le terminal TERᵢ et qu'aurait utilisée l'utilisateur antérieur avant l'instant courant, à accéder, sans ouvrir ladite application, à l'espace de stockage tampon de cette dernière, éventuellement à l'aide d'une clé de décryptage fournie par une API (abréviation anglaise de « Application Programming Interface ») de ladite application, puis à supprimer les données d'usage correspondantes.

Dans le cas où en E41, aucune donnée d'identification relative à un utilisateur antérieur du terminal TERᵢ n'est enregistrée dans le module de stockage MS₁, il est procédé à la récupération, en E42b), à des informations de paramétrage préétablies par défaut.

En E43b), il est alors appliqué, au niveau du terminal TERᵢ, un traitement de confidentialité aux données d'usage associées à l'utilisateur antérieur qui n'a pas été identifié, en fonction des informations de paramétrage récupérées en E42b). A titre d'exemple non exhaustif, un tel traitement met en œuvre ce qui suit :
- supprimer dudit terminal TERᵢ tout ou partie desdites données d'usage associées à l'utilisateur antérieur, telles que par exemple les historiques Internet des navigateurs utilisés par ce dernier avant l'instant courant, et/ou
- déconnecter l'utilisateur antérieur non identifié de tout ou partie des ressources sécurisées ou non auxquelles l'utilisateur antérieur a accédé à l'aide du terminal TERᵢ avant l'instant courant. Il peut s'agir par exemple de comptes appartenant à l'utilisateur antérieur non identifié auxquels il a accédé avant l'instant courant, ou encore d'applications encore ouvertes à l'instant courant.

Dans les cas particuliers suivants, il n'est pas procédé à la récupération de données d'usage associées à l'utilisateur antérieur :
- le terminal TERᵢ est un terminal utilisé exclusivement par l'utilisateur courant, comme dans le cas de la figure 1A, et l'utilisateur antérieur utilisait un terminal partagé avant l'instant courant,
- l'utilisateur courant est le premier utilisateur du terminal TERᵢ qui est partagé entre les utilisateurs UT₁, UT₂,..., UTⱼ, ..., UT_{M} de la figure 1B, ou, en variante, l'utilisateur courant est le premier utilisateur depuis une réinitialisation des historiques du terminal TERᵢ qui est partagé entre les utilisateurs UT₁,UT₂,..., UTⱼ, ..., UT_{M} de la figure 1B.

A l'issue des actions qui viennent d'être décrites ci-dessus, il est procédé, en référence à nouveau à la figure 2 :
- en E2, à la récupération des informations de paramétrage de l'utilisateur courant vis-à-vis du terminal TERᵢ,
- en E3, à la récupération des données d'usage de l'utilisateur courant vis-à-vis d'un terminal antérieur TERₖ, en application des informations de paramétrage récupérées en E2,
- éventuellement en E31, à une reconfiguration des données d'usage récupérées selon un format compatible avec celui du terminal TERᵢ,
- en E4, à une configuration du terminal courant TERᵢ avec les données d'usage récupérées en E3 ou éventuellement reconfigurées en E31.

Les étapes qui viennent d'être décrites ci-dessus en référence aux figures 2 et 4 permettent d'obtenir une configuration automatique du terminal TERᵢ en possession de l'utilisateur courant à un instant courant, dont l'objectif est de poursuivre l'expérience de ciblage publicitaire optimale d'un côté en ce qui concerne l'utilisateur courant, et de préserver les fonctionnalités de vie privée de l'autre en ce qui concerne l'utilisateur antérieur du terminal courant TERᵢ.

Bien entendu, la récupération E3 des données d'usage est mise en œuvre en dépendance des paramétrages de l'utilisateur courant.

Si par exemple ledit utilisateur courant n'a pas demandé au niveau de son paramétrage la poursuite de son ciblage publicitaire en cas de changement de terminal, l'étape E3 ne sera pas mise en œuvre.

En outre, la récupération E3 desdites données d'usage de l'utilisateur courant sur le ou les terminaux qu'il a utilisés antérieurement implique bien entendu que ses usages antérieurs aient été préalablement conservés dans le module de stockages MS₂.

Selon un exemple de réalisation, la récupération des données d'usage de l'utilisateur courant consiste à récupérer la liste de ses actions référencées au niveau des différentes pistes de la lige temporelle créée lors de l'étape E22 de récupération des données d'usage représentée sur la figure 3, ladite ligne temporelle étant bornée entre l'instant de début d'utilisation et l'instant de fin de l'utilisation du terminal TERᵢ par l'utilisateur courant.

Cette récupération est en dépendance des variantes d'implémentation décrites ci-dessus: par exemple directement à partir des actions référencées sur ladite ligne temporelle, ou bien au niveau des moyens préexistants du terminal TERᵢ en fonction des bornes temporelles de la ligne temporelle, les horodatages d'actions au niveau de ces moyens préexistants devant correspondre à la plage de temps délimitée par la ligne temporelle créée en E22 sur la figure 3.

S'agissant de la configuration E4 du terminal TERᵢ avec les données d'usage de l'utilisateur courant récupérées en E3, elle a déjà été décrite plus haut dans la description en référence à la figure 2 et, pour ces raisons, ne sera pas à nouveau décrite en détail. En ce qui concerne l'objectif de non divulgation des informations personnelles de l'utilisateur courant dans le cadre où le terminal TERᵢ est partagé entre plusieurs utilisateurs, si dans la liste des actions référencées sur la ligne temporelle et associées aux actions de l'utilisateur courant, apparaît une action telle qu'une connexion à une ressource sécurisée pour laquelle l'utilisateur a demandé dans son paramétrage la déconnexion à la fin de l'utilisation du terminal TERᵢ, la configuration E4 consiste à déconnecter l'utilisateur courant de cette ressource, de même qu'à supprimer du terminal TERᵢ des données d'usage, telles que par exemple les traces et/ou historiques de connexion de l'utilisateur courant à cette ressource.

En ce qui concerne l'objectif de mise à niveau des informations personnelles de l'utilisateur courant sur le terminal TERᵢ, tous les comptes de l'utilisateur courant seront reconnectés en une seule passe ou bien au cas par cas, c'est-à-dire lorsque l'utilisateur courant active une application donnée, se connecte à un site Web sécurisé donné, etc.....avec le terminal TERᵢ.

En ce qui concerne l'optimisation du ciblage publicitaire de l'utilisateur courant, les données d'usage récupérées en E3 sont réinjectées dans le terminal TERᵢ par exemple par simple recopiage.

Dans le cas où ces données d'usage correspondent à des actions référencées sur différentes pistes d'une ligne temporelle créée en association avec l'utilisation, par l'utilisateur courant, de un ou plusieurs terminaux, avant l'instant courant, il est par exemple procédé à la recopie, dans le navigateur d'un type donné du terminal TERᵢ, ou bien au niveau d'un cookie de ce navigateur, des traces horodatées sur un navigateur de même type installé dans le ou les terminaux précédemment utilisés par l'utilisateur courant. Ces traces horodatées sont alors recopiées avec leur horodatage d'origine.

De façon générale, les étapes E43a), E44a), E45a), E3, E4 ou bien les étapes E42b), E43b), E3, E4 sont en général appliquées simultanément, et non pas l'une après l'autre. Par exemple, s'agissant du cache d'un navigateur Internet quelconque du terminal courant TERᵢ, les historiques de navigation correspondant à la ligne temporelle créée relativement à l'utilisateur antérieur seraient supprimés et remplacés par ceux correspondant à la ligne temporelle créée relativement à l'utilisateur courant vis-à-vis de l'utilisation par ce dernier d'un ou plusieurs terminaux avant l'instant courant. Il convient par ailleurs de noter que la plage temporelle représentative de la succession des actions utilisateur au cours du temps et contenue dans la ligne temporelle supprimée peut être distincte de la plage temporelle représentative de la succession des actions utilisateur au cours du temps et contenue dans la ligne temporelle qui vient en remplacement.

Un cas particulier serait celui où l'utilisateur courant serait utilisateur principal du terminal TERᵢ et d'un autre terminal TERₖ. Ce peut être le cas si par exemple le terminal TERᵢ est un terminal utilisé exclusivement par l'utilisateur courant, et que le terminal TERₖ est un terminal partagé entre plusieurs utilisateurs, l'utilisateur courant effectuant alternativement des actions sur ces deux terminaux, en application de paramétrages correspondants. Dans une telle situation, il serait alors procédé à une mise en correspondance de la plage temporelle représentative de la succession des actions utilisateur au cours du temps et contenue dans la ligne temporelle créée en association avec l'utilisation, par l'utilisateur courant, du terminal TERᵢ, avec la plage temporelle représentative de la succession des actions utilisateur au cours du temps et contenue dans la ligne temporelle créée en association avec l'utilisation, par l'utilisateur courant, du terminal TERₖ. A l'issue de cette mise en correspondance, la ligne temporelle nouvellement créée dans le terminal TERᵢ aurait alors :
- un instant de départ horodaté comme l'instant de départ de la plage temporelle représentative de la succession des actions utilisateur au cours du temps et contenue dans la ligne temporelle créée en association avec l'utilisation, par l'utilisateur courant, du terminal TERᵢ,
- un instant de fin horodaté comme l'instant de fin de cette plage temporelle.

Les données d'usage référencées sur ces deux lignes temporelles différentes peuvent ensuite être fusionnées sur la ligne temporelle nouvellement créée dans le terminal TERᵢ sur la base de leurs horodatages respectifs, ou en variante plus élaborée, être fusionnées sur des pistes identiques de la ligne temporelle nouvellement créée dans le terminal TERᵢ (ex : piste correspondant à un navigateur d'un premier type, piste correspondant à un navigateur d'un deuxième type, etc...).

En relation maintenant avec la figure 5, est décrite la structure simplifiée du dispositif ACT d'activation automatique de la configuration d'un terminal TERᵢ, selon un exemple de réalisation de l'invention.

Le dispositif ACT est contenu dans un terminal de communication du type mentionné plus haut dans la description, par exemple ici un smartphone.

De façon connue en soi, le terminal de communication TERᵢ comprend :
- une interface de communication COM qui est adaptée pour communiquer, via le réseau de communication RC des figures 1A et 1B, selon par exemple le protocole http (abréviation anglaise de « HyperText Transfer Protocol »),
- un module INT de traitement des interactions utilisateurs Ul,
- un écran de visualisation EC,
- un haut-parleur HP,
- une interface DEC de décodage audio/vidéo des contenus de type texte, audio, vidéo ou audiovisuel, ladite interface étant adaptée pour transmettre les signaux décodés à l'écran EC ou dans le haut-parleur HP.

Le dispositif ACT comprend des ressources physiques et/ou logicielles, en particulier un circuit de traitement CT pour mettre en œuvre le procédé d'activation automatique tel que représenté sur les figures 2 à 4.

Le circuit de traitement CT contient un processeur PROC piloté par un programme d'ordinateur PG.

A l'initialisation, les instructions de code du programme d'ordinateur PG sont par exemple chargées dans une mémoire RAM, notée MR, avant d'être exécutées par le circuit de traitement CT.

Selon l'invention, le dispositif ACT comprend également :
- un module de téléchargement TEL1 adapté pour télécharger dans le terminal TERᵢ, depuis le module de stockage MS₁ :
   - les informations de paramétrage de l'utilisateur courant et/ou d'un utilisateur antérieur ayant utilisé le terminal TERᵢ avant l'instant courant,
   - les données d'identification de l'utilisateur antérieur, dans le cas où ce dernier est authentifié,
- un module de téléchargement TEL2 adapté pour télécharger dans le terminal TERᵢ, depuis le module de stockage MS₂ ou une mémoire tampon (non représentée) du terminal TERᵢ, les données d'usage de l'utilisateur courant relatives à un terminal utilisé par ce dernier avant l'instant courant ou bien les données d'usage de l'utilisateur antérieur qui a utilisé le terminal TERᵢ avant l'instant courant,
- un module de traitement TRT adapté pour configurer le terminal TERᵢ avec les données d'usage récupérées,
- un module ANA d'analyse des actions de l'utilisateur courant du terminal TERᵢ,
- un module REF de référencement adapté pour référencer temporellement des actions analysées, en fonction des informations de paramétrage de l'utilisateur courant,
- un module de gestion CFD adapté pour appliquer un traitement de confidentialité sur les données d'usage de l'utilisateur antérieur qui a utilisé le terminal TERᵢ avant l'instant courant.

Les modules TEL1, TEL2, TRT, ANA, REF et CFD sont pilotés par le processeur PROC du circuit de traitement CT.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention tel que défini par les revendications suivantes.

## Revendications

1. Procédé d'activation automatique de la configuration d'un terminal de communication (TERi) qui est personnalisée en fonction d'un utilisateur courant du terminal, ledit utilisateur étant identifié (E1) à un instant courant en possession dudit terminal, **caractérisé en ce qu'**il met en œuvre ce qui suit :
- récupérer (E2) des informations de paramétrage dudit terminal qui ont été prédéfinies par l'utilisateur courant identifié en tant que règles de récupération de données d'usage du terminal,
- récupérer (E3) des données d'usage d'au moins un terminal de communication ayant été utilisé par ledit utilisateur courant antérieurement à l'instant courant, en fonction desdites règles de récupération,
- configurer (E4) ledit terminal que l'utilisateur courant a en sa possession avec les données d'usage récupérées en fonction desdites règles.

2. Procédé selon la revendication 1, dans lequel pendant toute la durée d'utilisation du terminal par l'utilisateur courant, il est mis en œuvre ce qui suit :
- analyse (E21) des actions de l'utilisateur courant en relation avec ledit terminal,
- pour une action donnée, récupérer ou non (E22) une donnée d'usage dudit terminal correspondant à ladite action donnée et au moyen support de ladite action, en association avec l'instant où l'action a été mise en œuvre, en fonction des informations de paramétrage dudit terminal récupérées.

3. Procédé selon la revendication 1 ou la revendication 2, dans lequel si un utilisateur antérieur, différent de l'utilisateur courant, a utilisé le terminal avant l'instant courant, il est mis en œuvre ce qui suit :
- récupérer des informations de paramétrage dudit terminal associées à l'utilisateur antérieur,
- récupérer (E43a)) des données d'usage dudit terminal ayant été utilisé par ledit utilisateur antérieur, en fonction des informations de paramétrage dudit terminal récupérées,
- appliquer (E45a) un traitement de confidentialité auxdites données d'usage récupérées en fonction des informations de paramétrage dudit terminal récupérées.

4. Procédé selon la revendication 3, dans lequel lorsque l'utilisateur antérieur a été identifié préalablement à la récupération des informations de paramétrage dudit terminal associées à l'utilisateur antérieur, lesdites informations de paramétrage récupérées sont des informations prédéfinies par ce dernier.

5. Procédé selon la revendication 3, dans lequel lorsque l'utilisateur antérieur n'a pas été identifié préalablement à la récupération des informations de paramétrage dudit terminal associées à l'utilisateur antérieur, les informations de paramétrage associées à l'utilisateur antérieur sont préétablies par défaut.

6. Procédé selon l'une quelconque des revendications 3 à 5, dans lequel le traitement de confidentialité appliqué aux données d'usage de l'utilisateur antérieur récupérées met en œuvre ce qui suit :
- recopier tout ou partie desdites données d'usage récupérées dans un espace de stockage associé à l'utilisateur antérieur, et/ou
- supprimer dudit terminal tout ou partie desdites données d'usage récupérées, et/ou
- déconnecter l'utilisateur antérieur de tout ou partie des ressources sécurisées auxquelles l'utilisateur antérieur a accédé.

7. Procédé selon l'une quelconque des revendications 3 à 6, dans lequel, au moins certaines desdites données d'usage dudit terminal ayant été utilisé par ledit utilisateur antérieur qui ont été récupérées sont sélectionnées à partir des informations de paramétrage dudit terminal associées à l'utilisateur antérieur pour configurer ledit terminal dans l'état de fonctionnement où ce dernier était lorsque l'utilisateur antérieur a fini de l'utiliser à un instant précédent l'instant courant.

8. Procédé selon l'une quelconque des revendications 3 à 7, dans lequel, pour chaque donnée d'usage dudit terminal ayant été utilisée par ledit utilisateur antérieur qui a été récupérée, est mis en œuvre ce qui suit :
- sélectionner une donnée d'usage à partir des informations de paramétrage dudit terminal associées à l'utilisateur antérieur,
- configurer ledit terminal avec ladite donnée d'usage sélectionnée dans l'état de fonctionnement où le terminal était lorsque l'utilisateur antérieur a fini de l'utiliser à un instant précédent l'instant courant, uniquement si l'utilisation d'une même donnée d'usage du terminal est requise par l'utilisateur courant,
- appliquer un traitement de confidentialité à ladite donnée d'usage sélectionnée.

9. Procédé selon l'une quelconque des revendications 1 à 8, dans lequel, pour tout utilisateur considéré, courant ou antérieur, lors de la récupération des données d'usage, au moins certaines données d'usage sont configurées (E31 ou E43a)) selon un format qui est utilisable par le terminal à l'instant courant.

10. Procédé selon l'une quelconque des revendications 1 à 9, dans lequel, pour tout utilisateur considéré, courant ou antérieur, les informations de paramétrage associées audit utilisateur considéré diffèrent selon le type de terminal susceptible d'être utilisé par ledit utilisateur considéré.

11. Dispositif d'activation automatique de la configuration d'un terminal de communication qui est personnalisée en fonction d'un utilisateur courant du terminal, ledit utilisateur étant identifié à un instant courant en possession dudit terminal, ledit dispositif étant **caractérisé en ce qu'**il comprend un circuit de traitement (CT) qui est agencé pour :
- récupérer des informations de paramétrage dudit terminal qui ont été prédéfinies par l'utilisateur courant identifié en tant que règles de récupération de données d'usage du terminal,
- récupérer des données d'usage d'au moins un terminal de communication ayant été utilisé par ledit utilisateur courant antérieurement à l'instant courant, en fonction desdites règles de récupération,
- configurer ledit terminal que l'utilisateur courant a en sa possession avec lesdites données d'usage récupérées en fonction desdites règles.

12. Terminal ce communication comprenant un dispositif selon la revendication 11.

13. Programme d'ordinateur comportant des instructions de code de programme pour l'exécution des actions du procédé selon l'une quelconque des revendications 1 à 10, lorsque ledit programme est exécuté sur un ordinateur.

14. Support d'enregistrement lisible par un ordinateur sur lequel est enregistré un programme d'ordinateur comprenant des instructions de code de programme pour l'exécution des actions du procédé selon l'une quelconque des revendications 1 à 10, lorsque ledit programme est exécuté par un ordinateur.

## Patentansprüche

1. Verfahren zur automatischen Aktivierung der Konfiguration eines Kommunikationsendgeräts (TERi), die in Abhängigkeit von einem aktuellen Benutzer des Endgeräts personalisiert wird, wobei der Benutzer zu einem aktuellen Zeitpunkt als in Besitz des Endgeräts erkannt wird (E1), **dadurch gekennzeichnet, dass** es Folgendes umsetzt:
- Wiederherstellen (E2) von Einstellinformationen des Endgeräts, die vom erkannten aktuellen Benutzer als Regeln für die Wiederherstellung von Nutzungsdaten des Endgeräts vordefiniert wurden,
- Wiederherstellen (E3) von Nutzungsdaten mindestens eines Kommunikationsendgeräts, das von dem aktuellen Benutzer vor dem aktuellen Zeitpunkt benutzt wurde, in Abhängigkeit von den Wiederherstellungsregeln,
- Konfigurieren (E4) des Endgeräts, das der aktuelle Benutzer in seinem Besitz hat, mit den Nutzungsdaten, die in Abhängigkeit von den Regeln wiederhergestellt wurden.

2. Verfahren nach Anspruch 1, wobei während der gesamten Dauer der Endgerätenutzung durch den aktuellen Benutzer Folgendes umgesetzt wird:
- Analyse (E21) der Aktionen des aktuellen Benutzers im Zusammenhang mit dem Endgerät,
- für eine bestimmte Aktion Wiederherstellen oder Nichtwiederherstellen (E22) einer Nutzungsdateneinheit des Endgeräts, die der bestimmten Aktion und dem Trägermittel der Aktion entspricht, in Verbindung mit dem Zeitpunkt, zu dem die Aktion durchgeführt wurde, in Abhängigkeit von den wiederhergestellten Einstellinformationen des Endgeräts.

3. Verfahren nach Anspruch 1 oder Anspruch 2, wobei, wenn ein vorheriger Benutzer, der sich vom aktuellen Benutzer unterscheidet, das Endgerät vor dem aktuellen Zeitpunkt benutzt hat, Folgendes umgesetzt wird:
- Wiederherstellen der Einstellinformationen des Endgeräts, die dem vorherigen Benutzer zugeordnet sind,
- Wiederherstellen (E43a)) der Nutzungsdaten des Endgeräts, das vom vorherigen Benutzer benutzt wurde, in Abhängigkeit von den wiederhergestellten Einstellinformationen des Endgeräts
- Anwenden (E45a) einer Vertraulichkeitsbehandlung auf die Nutzungsdaten, die in Abhängigkeit von den Einstellinformationen des Endgeräts wiederhergestellt wurden.

4. Verfahren nach Anspruch 3, wobei die wiederhergestellten Einstellinformationen, wenn der vorherige Benutzer vor der Wiederherstellung der dem vorherigen Benutzer zugeordneten Einstellinformationen erkannt wurde, die von Letzterem vordefinierten Informationen sind.

5. Verfahren nach Anspruch 3, wobei die dem vorherigen Benutzer zugeordneten Einstellinformationen voreingestellt werden, wenn der vorherige Benutzer vor der Wiederherstellung der Einstellinformationen, die dem vorherigen Benutzer zugeordnet sind, nicht erkannt wurde.

6. Verfahren nach einem der Ansprüche 3 bis 5, wobei die Vertraulichkeitsbehandlung, die auf die wiederhergestellten Nutzungsdaten des vorherigen Benutzers angewandt wird, Folgendes umsetzt:
- Kopieren aller oder eines Teils der wiederhergestellten Nutzungsdaten in einem Speicherbereich, der dem vorherigen Benutzer zugeordnet ist, und/oder
- Beseitigen aller oder eines Teils der wiederhergestellten Nutzungsdaten vom Endgerät und/oder
- Trennen des vorherigen Benutzers von allen oder einem Teil der gesicherten Ressourcen, auf die der vorherige Benutzer zugegriffen hat.

7. Verfahren nach einem der Ansprüche 3 bis 6, wobei mindestens bestimmte Nutzungsdaten des Endgeräts, die vom vorherigen Benutzer genutzt wurden und die wiederhergestellt wurden, auf der Grundlage der Einstellinformationen des Endgeräts, die dem vorherigen Benutzer zugeordnet sind, ausgewählt werden, um das Endgerät in dem Betriebszustand zu konfigurieren, in dem sich Letzteres befand, als der vorherige Benutzer dessen Verwendung zu einem Zeitpunkt vor dem aktuellen Zeitpunkt beendet hat.

8. Verfahren nach einem der Ansprüche 3 bis 7, wobei für jede wiederhergestellte Nutzungsdateneinheit des Endgeräts, das vom vorherigen Benutzer benutzt wurde, Folgendes umgesetzt wird:
- Auswählen einer Nutzungsdateneinheit auf der Grundlage der Einstellinformationen des Endgeräts, die dem vorherigen Benutzer zugeordnet sind,
- Konfigurieren des Endgeräts mit der ausgewählten Nutzungsdateneinheit in dem Betriebszustand, in dem sich das Endgerät befand, als der vorherige Benutzer dessen Verwendung zu einem Zeitpunkt vor dem aktuellen Zeitpunkt beendet hat, nur wenn die Verwendung einer selben Dateneinheit des Endgeräts vom aktuellen Benutzer verlangt wird,
- Anwenden einer Vertraulichkeitsbehandlung auf die ausgewählte Nutzungsdateneinheit.

9. Verfahren nach einem der Ansprüche 1 bis 8, wobei für jeden betreffenden Benutzer, aktuell oder vorherig, bei der Wiederherstellung der Nutzungsdaten mindestens bestimmte Nutzungsdaten gemäß einem Format konfiguriert werden (E31 oder E43a)), das zum aktuellen Zeitpunkt vom Endgerät nutzbar ist.

10. Verfahren nach einem der Ansprüche 1 bis 9, wobei für jeden betreffenden Benutzer, aktuell oder vorherig, die Einstellinformationen, die dem betreffenden Benutzer zugeordnet sind, sich je nach Art des Endgeräts unterscheiden, das vom betreffenden Benutzer verwendet werden kann.

11. Vorrichtung zur automatischen Aktivierung der Konfiguration eines Kommunikationsendgeräts, die in Abhängigkeit vom aktuellen Benutzer des Endgeräts personalisiert wird, wobei der Benutzer zu einem aktuellen Zeitpunkt als in Besitz des Endgeräts erkannt wird, wobei die Vorrichtung **dadurch gekennzeichnet ist, dass** sie einen Verarbeitungsschaltkreis (CT) umfasst, die zu Folgendem eingerichtet ist:
- Wiederherstellen der Einstellinformationen des Endgeräts, die vom erkannten aktuellen Benutzer als Regeln für die Wiederherstellung von Nutzungsdaten des Endgeräts vordefiniert wurden,
- Wiederherstellen der Nutzungsdaten mindestens eine Kommunikationsendgeräts, das vom aktuellen Benutzer vor dem aktuellen Zeitpunkt benutzt wurde, in Abhängigkeit von den Wiederherstellungsregeln.
- Konfigurieren des Endgeräts, das der aktuelle Benutzer in seinem Besitz hat, mit den Nutzungsdaten, die in Abhängigkeit von den Regeln wiederhergestellt wurden.

12. Kommunikationsendgerät, umfassend eine Vorrichtung nach Anspruch 11.

13. Computerprogramm, umfassend Programmcodeanweisungen zur Ausführung der Aktionen des Verfahrens nach einem der Ansprüche 1 bis 10, wenn das Programm vom Server ausgeführt wird.

14. Speichermedium, das durch einen Computer lesbar ist und auf dem ein Computerprogramm gespeichert ist, umfassend Programmcodeanweisungen zur Ausführung der Aktionen des Verfahrens nach einem der Ansprüche 1 bis 10, wenn das Programm von einem Computer ausgeführt wird.

## Claims

1. Method for automatically activating the configuration of a communication terminal (TERᵢ) that is customized depending on a current user of the terminal, said user being identified (E1), at a current time, as being in possession of said terminal, **characterized in that** it implements the following:
- recovering (E2) settings information, which has been predefined by the identified current user, of said terminal, in the form of recovery rules for recovering usage data of the terminal,
- recovering (E3) usage data of at least one communication terminal having been used by said current user before the current time, depending on said recovery rules,
- configuring (E4) said terminal that the current user has in his possession with the usage data recovered depending on said rules.

2. Method according to Claim 1, wherein, throughout the entire duration of use of the terminal by the current user, the following is implemented:
- analysing (E21) the actions of the current user in relation to said terminal,
- for a given action, recovering or not recovering (E22) an item of usage data of said terminal corresponding to said given action and to the support means for said action, in association with the time at which the action was implemented, depending on the recovered settings information of said terminal.

3. Method according to Claim 1 or Claim 2, wherein, if a previous user, different from the current user, has used the terminal before the current time, the following is implemented:
- recovering settings information, associated with the previous user, of said terminal,
- recovering (E43a)) usage data of said terminal having been used by said previous user, depending on the recovered settings information of said terminal,
- applying (E45a) confidentiality processing to said recovered usage data depending on the recovered settings information of said terminal.

4. Method according to Claim 3, wherein, when the previous user has been identified before the recovery of the settings information, associated with the previous user, of said terminal, said recovered settings information is information predefined by said previous user.

5. Method according to Claim 3, wherein, when the previous user has not been identified before the recovery of the settings information, associated with the previous user, of said terminal, the settings information associated with the previous user is established beforehand by default.

6. Method according to any one of Claims 3 to 5, wherein the confidentiality processing applied to the recovered usage data of the previous user implements the following:
- copying all or some of said recovered usage data into a storage space associated with the previous user, and/or
- deleting all or some of said recovered usage data from said terminal, and/or
- disconnecting the previous user from all or some of the secure resources that the previous user accessed.

7. Method according to any one of Claims 3 to 6, wherein at least some of said usage data of said terminal having been used by said previous user that have been recovered are selected from settings information, associated with the previous user, of said terminal in order to configure said terminal in the operating state in which said terminal was when the previous user finished using it at a time preceding the current time.

8. Method according to any one of Claims 3 to 7, wherein, for each item of usage data, having been used by said previous user and that has been recovered, of said terminal, the following is implemented:
- selecting an item of usage data from the settings information, associated with the previous user, of said terminal,
- configuring said terminal with said selected item of usage data in the operating state in which the terminal was when the previous user finished using it at a time preceding the current time, only if the use of one and the same item of usage data of the terminal is required by the current user,
- applying confidentiality processing to said selected item of usage data.

9. Method according to any one of Claims 1 to 8, wherein, for any current or previous user under consideration, when recovering the usage data, at least some usage data are configured (E31 or E43a)) in a format that is able to be used by the terminal at the current time.

10. Method according to any one of Claims 1 to 9, wherein, for any current or previous user under consideration, the settings information associated with said user under consideration differs according to the type of terminal liable to be used by said user under consideration.

11. Device for automatically activating the configuration of a communication terminal that is customized depending on a current user of the terminal, said user being identified, at a current time, as being in possession of said terminal, said device being **characterized in that** it comprises a processing circuit (CT) that is designed to:
- recover settings information, which has been predefined by the identified current user, of said terminal, in the form of recovery rules for recovering usage data of the terminal,
- recover usage data of at least one communication terminal having been used by said current user before the current time, depending on said recovery rules,
- configure said terminal that the current user has in his possession with the usage data recovered depending on said rules.

12. Communication terminal comprising a device according to Claim 11.

13. Computer program including program code instructions for executing the actions of the method according to any one of Claims 1 to 10 when said program is executed on a computer.

14. Computer-readable recording medium on which there is recorded a computer program comprising program code instructions for executing the actions of the method according to any one of Claims 1 to 10 when said program is executed by a computer.
